(19) Europäisches Patentamt

European Patent Office

Office européen des brevets

(11) **EP 1 020 856 A2**

(12) **EUROPEAN PATENT APPLICATION**

(43) Date of publication:
19.07.2000 Bulletin 2000/29

(51) Int. Cl.⁷: **G11B 20/00**, G11B 20/18, G06F 12/14

(21) Application number: 00100158.5

(22) Date of filing: 11.01.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **11.01.1999 JP 475499**

(71) Applicant: **YAMAHA CORPORATION**
**Hamamatsu-shi Shizuoka-ken (JP)**

(72) Inventors:
• **Furukawa, Masamichi**
  **Hamakita-shi, Shizuoka-ken, 434-0045 (JP)**
• **Tsunoda, Shigeo**
  **Hamamatsu-shi, Shizuoka-ken (JP)**
• **Uchiyama, Toshihito**
  **Hamamatsu-shi, Shizuoka-ken (JP)**
• **Usui, Akira**
  **Hamamatsu-shi, Shizuoka-ken (JP)**

(74) Representative:
**Geyer, Ulrich F., Dr. Dipl.-Phys. et al**
**WAGNER & GEYER,**
**Patentanwälte,**
**Gewürzmühlstrasse 5**
**80538 München (DE)**

(54) **Data protection method using decryption key concealed in compliant mark**

(57) A recording apparatus is constructed for encrypting data using a key and issuing a compliant mark for authenticating the data. In the recording apparatus, an encrypting section encrypts the data with the key before recording of the data such that the key is required to decrypt the data when the recorded data is to be reproduced by a player machine. An encoding section adds an error correction code to the encrypted data to form a data block such that the encrypted data can be made free of a noise by an error correction process of the data block using the error correction code when the encrypted data is to be reproduced by the player machine. A writing section writes secret information containing the key and the compliant mark over the data block in the form of a noise such that the secret information containing the key and the compliant mark can be separated from the encrypted data by the error correction process performed by the player machine, thereby allowing the player machine to use the key to decrypt the encrypted data only if the player machine can detect the compliant mark from the separated noise.

FIG.1

EP 1 020 856 A2

**Description**

BACKGROUND OF THE INVENTION

The present invention generally relates to encryption and decryption methods for effectively preventing non-complying recording and reproduction in CD, DVD, DAT, MD, and broadcast-type media (CS).
Conventionally, for copyright protection of the above-mentioned music and video media, various methods have been proposed such as digital watermarking, cross authentication, and encryption. However, each of these methods alone cannot achieve sufficient copyright protection. For technologies related to these methods, the use of a compliant mark and the encryption of a signal have been proposed. If there is means for informing that data on a certain recording medium has been recorded with a compliant recorder, a compliant reproducing machine can reject any disc recorded in a non-compliant manner. For this means, the compliant mark is used. The signal encryption method is a generally practiced technique for prohibiting reproduction on non-compliant equipment. The following further describes these two copy protection methods.

(1) Compliant mark

As the recording density of data to be recorded on a recording medium increases, there are more chances of erroneous writing of signal on the recording medium and erroneous reading of signals therefrom. To remove these problems, recording media generally use an error correction system called ECC (Error Correction Code) in which a code signal for error correction is added to recorded data. This system inherently has data redundancy. Therefore, cross authentication information key can be placed in this redundant portion. In the system thus configured, writing of secret data over recording (or transmitting) signals makes these signals all errors. When the signals overwritten with the secret data are reproduced (or received) and compliant error processing is executed on them, these signals added with the secret data are all corrected while the secret data is removed. These secret data can be separated during the error correction processing, and none of these data appear in the corrected output signals. Thus, secret data can be transmitted as concealed information, which is invisible to the outside. Therefore, this secret data can be used as a compliant mark. To be more specific, if a given machine by which a recording medium has been recorded is authenticated from a compliant content provider, a symbol for authentication is included in the signal to be recorded or transmitted as the secret data. At reproduction of the signal, this symbol is detected and the content signal is reproduced (or received) if the symbol is found authenticated. If not, the reproduction (or reception) is discontinued to prevent the non-compliant disc from distributing.

(2) Encryption

It is also considered that, when recording (or transmitting) data on a recording medium, the data is encrypted by a key such that only a compliant reproducing machine (or a receiver machine) can reproduce (or receive) the data. This technique is very effective for content protection, but presents a problem of how to transmit the key for decrypting the data. If this key is transmitted along with the data in the same medium, the key is easily discovered and cracked. Therefore, when this technique is used in a closed system, the key is sent over a route different from that for the data, thereby making it impossible to break the key.
The authentication method based on the above-mentioned compliant mark does not allow a compliant reproducing machine to reproduce non-compliant recording media having no compliant mark. However, it is comparatively easy to enable data reproduction with non-compliant authentication by a non-compliant reproducing machine. In turn, the conventional encryption methods have a problem in the safe transmission of decryption keys. As described above, this problem may be circumvented, as far as a closed system is concerned, by transmitting description keys over a route different from that over which encrypted data is transmitted. However, such a technique cannot be applied to consumer electronics products such as CD.

SUMMARY OF THE INVENTION

It is therefore an object of the present invention to provide an encryption method and a description method that can prevent a compliant recording machine from reproducing data copied in a non-compliant manner and, at the same time, prevent a non-compliant reproducing machine from reproducing even compliant data.
In carrying out the invention and according to one aspect thereof, there is provided an encryption method of data using a key and being performed in a compliant recording machine issuing a compliant mark for authenticating the data. The encryption method comprises the steps of encrypting the data before recording thereof with the key such that the key is required to decrypt the data when the recorded data is to be reproduced by a player machine, adding an error correction code to the encrypted data to form a data block such that the data can be made free of a noise by an error correction process of the data block using the error correction code when the data is to be reproduced by the player machine, and writing secret information containing the key and the compliant mark over the data block in the form of a noise such that the secret information containing the key and the compliant mark can be separated from the data by the error correction process performed by the player machine, thereby allowing the player machine to use the key to decrypt the data if the player can detect the compliant mark from the separated secret information. Preferably, the encryption method further comprises the steps of providing information being necessary for encrypting the data and containing an identification code of the compliant recording machine and a function group dedicated for generating the compliant mark, and generating the compliant mark from the key based on the provided information while the key is used to execute encryption of the data. Preferably, the encryption method further comprises the steps of providing information containing an identification code identifying a medium used for recording the data, another identification code identifying the compliant recording machine and a function group dedicated for generating the compliant mark, and generating the compliant mark from the key based on the provided information while the key is used to execute encryption of the data.

In carrying out the invention and according to another aspect thereof, there is provided an encryption method of data using a key and being performed in a compliant recording machine capable of attaching a compliant mark for authenticating the data. The encryption method comprises the steps of initially generating a session key in a random manner, subsequently generating an execution key from the session key, encrypting the data before recording thereof with the execution key such that the execution key is required to decrypt the data when the recorded data is to be reproduced by a player machine, adding an error correction code to the encrypted data to form a data block such that the data can be made free of a noise by an error correction process of the data block using the error correction code when the data is to be reproduced by the player machine, further generating the compliant mark from the session key such that the session key is concealed in the compliant mark, and writing the compliant mark over the data block within a range of the noise such that the compliant mark can be separated from the data by the error correction process performed by the player machine, thereby allowing the player machine to restore the execution key from the separated compliant mark so as to decrypt the data if the player machine can recognize the separated compliant mark. Preferably, the step of further generating comprises generating the compliant mark by encrypting the session key. Preferably, the step of further generating comprises generating the compliant mark by encrypting the session key according to specific information including dedicated functions, thereby allowing the player machine to decrypt the session key to restore the execution key if the player machine can handle or interpret the specific information. Preferably, the step of adding comprises adding an error correction code to the encrypted data to form the data block and recording the formed data block in a medium allotted an identification code, and the step of further generating comprises generating the compliant mark by encrypting the session key based on the identification code allotted to the medium so that the identification code is incorporated into the compliant mark. Further, the step of initially generating comprises generating the session key in a random manner such as to change the session key at a predetermined time interval. Preferably, the step of adding comprises adding an error correction code to the encrypted data to form the data block such that the data block contains the data composed of a plurality of bytes arranged in a matrix of rows and columns, and the error correction code composed of first parity information used for performing the error correction process on the rows of the data and second parity information used for performing the error correction process on the columns of the data, and the step of writing comprises writing the compliant mark over the data block within a range of the noise such that each row of the data contains at most one byte of the compliant mark and each column of the data contains at most one byte of the compliant mark. Further, the step of initially generating comprises generating the session key composed of key data and a key parity used for an error correct process of the key data, and the step of writing comprises writing the compliant mark containing the key data and the key parity of the session key over the data block such that a part of the key data is written over the error correction code and a part of the key parity is written over the matrix of the data.

In carrying out the invention and according to still another aspect thereof, there is provided a decryption method of data using a key and performed in a compliant reproducing machine capable of recognizing a compliant mark embedded in the data for authenticating the data. The decryption method comprises the steps of inputting a data block composed of encrypted data and an error correction code into the compliant reproducing machine together with secret information embedded in the dada block in the form of a separable noise, the secret information containing a key and a compliant mark, performing an error correction process of the inputted data block with the error correction code to separate the noise from the encrypted data, detecting the compliant mark from the separated noise according to information prestored in the compliant reproducing machine including an identification code thereof, and restoring the key from the separated noise using the detected compliant mark, thereby allowing the compliant reproducing machine to decrypt the encrypted data by the restored key. Preferably, the step of detecting comprises detecting the compliant mark according to an identification code of the compliant reproducing machine and another identification code of a medium which is used to record the data block and is loaded into the compliant reproducing machine.

In carrying out the invention and according to yet another aspect thereof, there is provided a decryption method of data performed in a reproducing machine using a session key generated in a random manner. The decryption method comprises the steps of inputting a data block composed of encrypted data and an error correction code into the reproducing machine together with information of the session key embedded in the dada block in the form of a separable noise, performing an error correction process of the inputted data block with the error correction code to separate the noise from the encrypted data, and restoring the session key from the separated noise, thereby allowing the reproducing machine to decrypt the encrypted data by the restored session key, wherein the step of inputting comprises inputting the data block that contains the encrypted data composed of a plurality of bytes arranged in a matrix of rows and columns, the error correction code composed of first parity information used for performing the error correction process on the rows of the data and second parity information used for performing the error correction process on the columns of the data, and the information of the session key composed of a plurality of bytes distributed over the data block such that each row of the encrypted data contains at most one byte of the session key and each column of the encrypted data contains at most one byte of the session key, and wherein the step of performing includes rearranging the information of the session key contained in the separated noise into either of one row or one column of the bytes, and applying an error correction process to the rearranged information of the session key. Preferably, the step of rearranging comprises rearranging the information of the session key into one row or one column of the bytes having the same dimension as one row or one column of the encrypted data, and the step of applying comprises applying the same error correction process to the rearranged information of the session key as that applied to the encrypted data. Preferably, the step of rearranging comprises rearranging the information of the session key scattered over the data block into one row or one column of the bytes such that one row or one column may contain blank bytes, and interpolating the blank bytes by filling thereto a default value. Preferably, the step of inputting comprises inputting a group of data blocks together with the session key embedded commonly to each of the dada blocks of the same group, and the step of restoring comprises restoring the session key which is valid only for decryption of the data blocks belonging to the same group.

According to the invention, data is encrypted and the key information for decrypting the encrypted data is additionally written as a compliant mark over a data block to which error correction is performed. Consequently, this compliant mark does not appear in the data obtained by reproduction. Since the data copied in a non-compliant manner includes no compliant mark, such data cannot be reproduced by a compliant reproducing machine. On the other hand, the properly encrypted data cannot be reproduced by a non-compliant machine since the same cannot recognize the compliant mark. In addition, according to the invention, the key information for decryption is additionally written over the data, thereby facilitating key delivery.

The key information is encrypted and the encrypted key information is written over the data, thereby enhancing the degree of secrecy of the key information. Use of the ID information of the recording medium for encrypting the key information allows a player machine to read the key information only from that recording medium, thereby more effectively preventing non-compliant bit-to-bit replication from being practiced.

In arranging the key information, when additionally writing the key information over a data block, the key information is arranged at least one byte in each of the row and column directions of the data block so as to substantially prevent the error correction process for the data from being degraded. In this case, the key information is constituted by key data and a key parity for error-correcting the key data. Then, the key information additionally written over the data block is rearranged at reproduction into one data row or one data column to perform the error correction process. This always permits the correct extraction of the added key information by the compliant error correction process. Further, the key information is additionally written over the data block along row and column directions of the data block in a scattered manner. When the key information thus over-written is rearranged at reproduction as one data row or one data column, interpolation between one piece of key information and another piece of key information by a known value (for example, 0000 0000) for error correction is conducted so that the conventional error correction techniques become available.

In addition, writing at least a part of the key data over the recording area of the parity information and writing at least a part of the key parity over an area other than the parity information recording area prevent the key data from being recognized even if the error-corrected data is compared with the original data. Thus, the degree of secrecy is enhanced.

BRIEF DESCRIPTION OF THE DRAWINGS

FIG. 1 is a block diagram illustrating the configuration of an optical disc recorder practiced as one embodiment of the invention.
FIG. 2 is a block diagram illustrating the configuration of an optical disc player practiced as another embodiment of the invention.
FIG. 3 is a diagram illustrating details of an ECC block.
FIG. 4 is a diagram illustrating a data frame of the ECC block.
FIG. 5 is a diagram illustrating a first example in which key information is additionally written over a data block.

FIG. 6 is a diagram illustrating a second example in which key information is additionally written over a data block.

FIG. 7 is a diagram illustrating a third example in which key information is additionally written over a data block.

FIG. 8 is a diagram illustrating control data contained in the key information.

FIG. 9 is a flowchart indicative of processing at data recording.

FIG. 10 is a flowchart indicative of processing at data reproducing.

DETAILED DESCRIPTION OF THE INVENTION

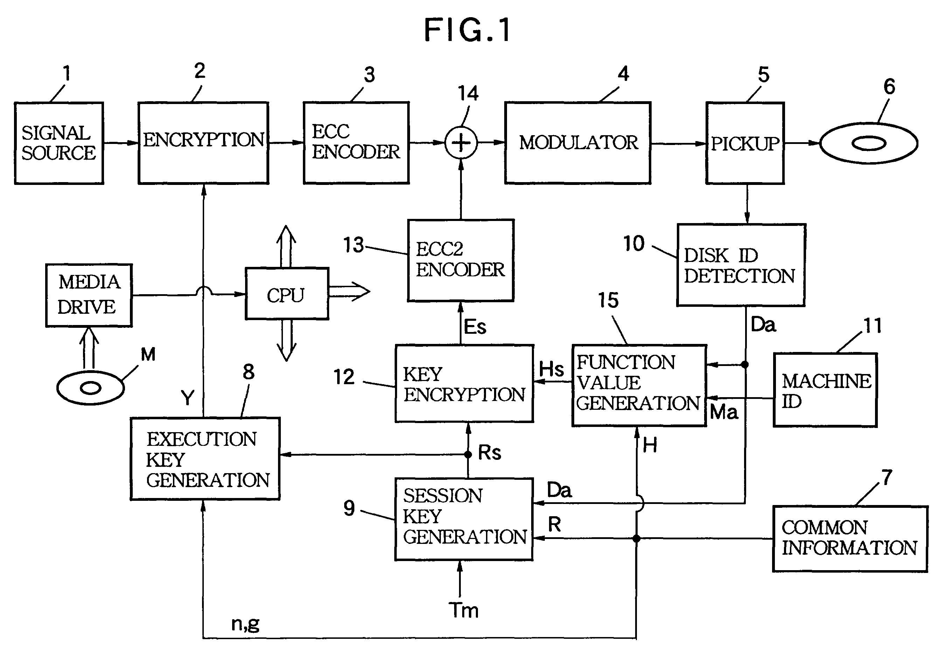

This invention will be described in further detail by way of example with reference to the accompanying drawings. FIG. 1 is a block diagram illustrating the configuration of an optical disc recorder practiced as one embodiment of the invention. Data such as a music signal or a video signal outputted from a signal source 1 for recording is encrypted in an encrypting block 2 according to a predetermined encryption algorithm. The encrypted data is supplied to an ECC encoder 3. In the ECC encoder 3, an error correction code is added to the encrypted data to provide a data block, which withstands a read error of about 1%. Such a data block is hereafter referred to as an ECC block. The ECC block is then divided into plural sectors. A modulator 4 performs modulation processing such as 8-to-16 bit conversion (DVD) or 8-to-14 bit conversion (CD) on the sectors. The resultant sectors are recorded through a pickup 5 onto an optical disc 6.

Thus, the recording of encrypted data is made onto a normal recording medium. With the present system, however, key information is written over the ECC block. To be more specific, on the basis of common information 7 for authentication provided by a license issuing organization and a session key Rs to be described later, an execution key generating block 8 generates an execution key Y for encryption. For the session key Rs, a random number, for example is used. The session key Rs is generated in a session key generating block 9. The generated session key Rs is encrypted in a key encrypting block 12. Namely, a disc ID embedded in the optical disc 6 is detected from the pickup output by a disc ID detecting block 10. On the basis of the disc ID, a machine ID 11 provided by the license issuing organization, and a dedicated function given as part of the common information 7, a function value generating block 15 generates a function value Hs for encryption and/or decryption. On the basis of this function value Hs, the key encrypting block 12 encrypts the session key RS. The encrypted session key is added with a key parity by an ECC2 encoder 13. These key data and key parity are additionally written by an adder 14 over the ECC block as a compliant mark.

The inventive recording apparatus of FIG. 1 is constructed for encrypting data using a key and issuing a compliant mark for authenticating the data. In the recording apparatus, the encrypting block 2 encrypts the data with the key before recording of the data such that the key is required to decrypt the data when the recorded data is to be reproduced by a player machine. The ECC encoder 3 adds an error correction code to the encrypted data to form a data block such that the encrypted data can be made free of a noise by an error correction process of the data block using the error correction code when the encrypted data is to be reproduced by the player machine. A writing section including ECC2 encoder 13 and adder 14 writes secret information containing the key and the compliant mark over the data block in the form of a noise such that the secret information containing the key and the compliant mark can be separated from the encrypted data by the error correction process performed by the player machine, thereby allowing the player machine to use the key to decrypt the encrypted data if the player machine can detect the compliant mark from the separated secret information.

In detail, the inventive recording apparatus of FIG. 1 encrypts data using a key and is capable of attaching a compliant mark for authenticating the data. In the recording apparatus, the first generating section 9 initially generates a session key Rs in a random manner. The second generating section 8 subsequently generates an execution key Y from the session key Rs. The encrypting block 2 encrypts the data with the execution key Y before recording of the data such that the execution key Y is required to decrypt the encrypted data when the recorded data is to be reproduced by a player machine. The ECC encoder 3 adds an error correction code to the encrypted data to form a data block such that the encrypted data can be made free of a noise by an error correction process of the data block using the error correction code when the recorded data is to be reproduced by the player machine. The third generating section including the function value generator 15 and the key encrypting block 12 further generates the compliant mark Es from the session key Rs such that the compliant mark Es contains information of the session key Rs. Stated otherwise, the key is concealed in the compliant mark. The writing section including ECC2 encoder 13 and adder 14 writes the compliant mark Es over the data block in the form of a noise such that the compliant mark Es can be separated from the data by the error correction process performed by the player machine, thereby allowing the player machine to restore the execution key Y from the separated compliant mark so as to decrypt the data if the player machine can recognize or interpret the separated compliant mark Es.

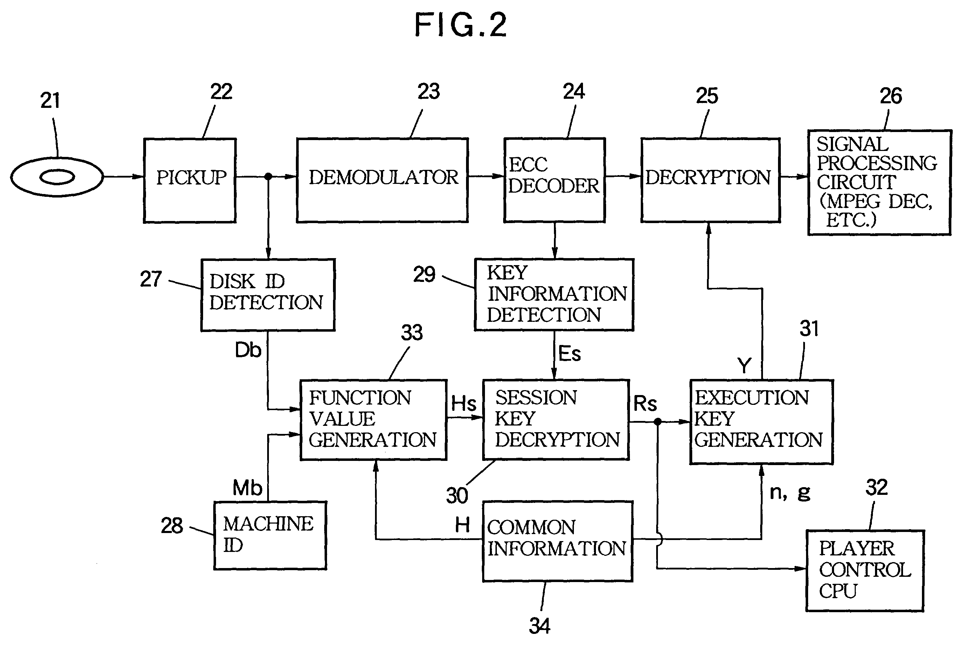

FIG. 2 is a block diagram illustrating the configuration of an optical disc player machine practiced as an embodiment of the invention. Data recorded on an optical disc 21 with the key information additionally written over the ECC block is read by a pickup 22. This data is then supplied to a demodulator 23, in which demodulation processing such as 16-to-8 bit conversion (DVD) or 14-to-8 bit conversion (CD) is performed on the data. The demodulated data is error-corrected by an ECC decoder 24, and the error-corrected data is then supplied to a decryption block 25. The data at this stage is deprived of the key information incorporated into the compliant mark by the error correction process. The decrypting block 25 decrypts the encrypted data by use of an execution key Y restored from the key information by a procedure to be described later. The decrypted data is supplied to a signal processing circuit 26 such as an MPEG decoder, in which predetermined reproduction processing is executed on the data.

Since the output from the pickup 22 includes disc ID information Db, it is detected by a disc ID detecting block 27. The detected disc ID Db is supplied to a function value generating block 33 along with a machine ID Mb from a machine ID block 28 provided by a license issuing organization and along with a dedicated function H given as common information 34. In the function value generating block 33, a function value for decryption is obtained. A key information detecting block 29 detects the key information Es additionally written over the ECC block processed by the ECC decoder 24, and performs error correction process of the key information Es. Alternatively, the error correction process of the key information Es can be executed in the ECC decoder 24 as with normal DVD data. The detected key information Es is decrypted on the basis of the obtained function value Hs in a session key decrypting block 30. The decrypted session key Rs is supplied to an execution key generating block 31, in which, on the basis of the session key Rs and a part of the common information 34, the execution key Y for description is generated. The decrypted session key Rs is also supplied to a player control CPU 32 to enable various reproduction controlling operations.

The inventive reproducing apparatus of FIG. 2 decrypts data using a key and is capable of recognizing a compliant mark embedded in the data for authenticating the data. In the reproducing apparatus, an input section including the pickup 22 receives a data block composed of encrypted data and an error correction code together with secret information embedded in the dada block as a separable noise. The secret information contains a key and a compliant mark. The ECC decoder 24 performs an error correction process of the received data block with the error correction code to separate the noise from the encrypted data. The detector 29 detects the compliant mark from the separated noise according to prestored information including the machine identification code Mb. A restoring section including the key decrypting block 30 restores the key from the separated noise using the detected compliant mark. The decrypting block 25 decrypts the encrypted data by the restored key so as to reproduce the data.

In detail, the reproducing apparatus of FIG. 2 decrypts encrypted data using the session key Rs generated in a random manner. In the reproducing apparatus, the pickup 22 receives a data block composed of encrypted data and an error correction code together with information of the session key Rs embedded in the dada block as a separable noise. The ECC decoder 24 performs an error correction process of the received data block with the error correction code to separate the noise from the encrypted data. The restoring section including the key decrypting block 30 restores the session key Rs from the separated noise. The decrypting block 25 decrypts the encrypted data based on the restored session key Rs. In such a construction, the input section receives the data block containing the encrypted data composed of a plurality of bytes arranged in a matrix of rows and columns, the error correction code composed of first parity information used for performing the error correction process on the rows of the encrypted data and second parity information used for performing the error correction process on the columns of the encrypted data, and the information of the session key composed of a plurality of bytes distributed over the data block such that each row of the encrypted data contains at most one byte of the session key and each column of the encrypted data contains at most one byte of the session key. The detector 29 rearranges the information of the session key contained in the separated noise into either of one row or one column of the bytes, and applies an error correction process to the rearranged information of the session key.

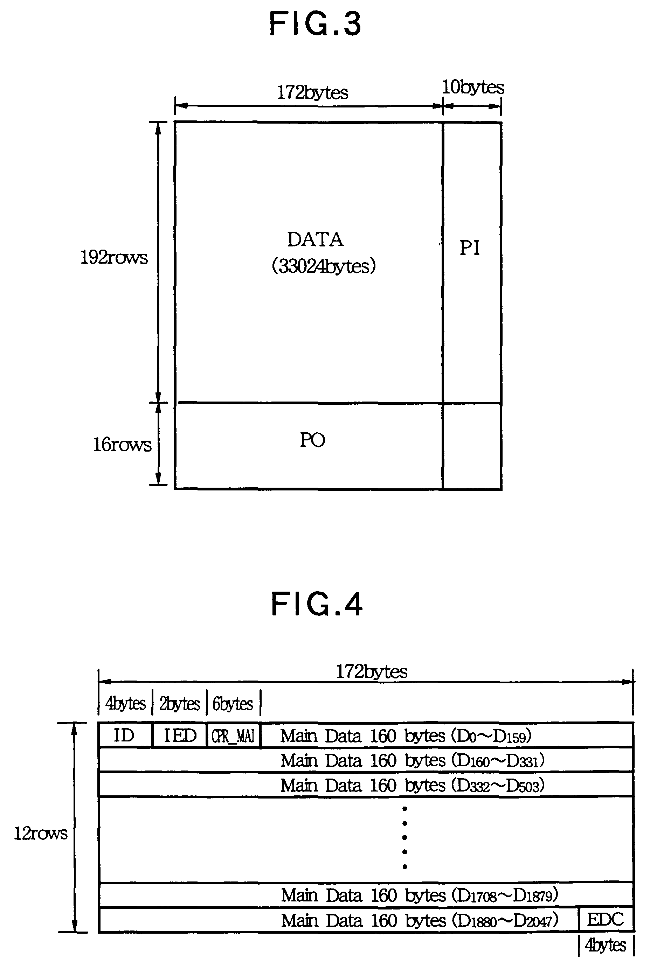

The following describes the encryption processing and the decryption processing by the recorder and the player configured as described above. FIG. 3 is a diagram illustrating details of an ECC block generated by the ECC encoder 3 (in the case of DVD). Data (user data) is constituted by 172 bytes in row and 192 bytes in column, totaling 33,024 bytes. Ten-byte parity data PI is added to each piece of row 172-byte data and 16-row parity data PO is added to each piece of the column 192-row data, thereby constituting one ECC block. In recording, the ECC block is divided into 16 sectors before being recorded. Each sector is constituted by data of 172 (= 91 + 81) bytes x 12 rows, parity data PO of 172 bytes x 1 row, and parity data PI of 10 bytes x 13 rows, to which a resync signal of 2 bytes x 13 rows x 2 is added, totaling 2,418 bytes.

With regard to the data of each sector, as shown in FIG. 4, the sector in DVD is constituted by ID data (ID) of 4 bytes, an ID error detection code (IED) of 2 bytes, copy manage information (CPR_MAI) of 6 bytes, main data of 2048 bytes, and a sector error detection code (EDC) of 4 bytes, totaling 2064 bytes. It should be noted that the ECC block in DVD is ECC-encoded in the form of product sign for 16 sectors and the encoded sectors are further interleaved. In each sector, the same scramble is performed on the main data of 2048 bytes on the ECC block basis. The scramble processing is executed by performing an EXOR (exclusive logical summation) operation between the low-order 8 bits of a 15-bit LFSR (Linear Feedback Shift Register) and 8-bit data. It should be noted that the polynomial of the LFSR is represented by $X^{15} + X^{11} + 1$. The initial preset value of the 15-bit LFSR is determined on the basis of the value of bit 7 - bit 4 of the ID.

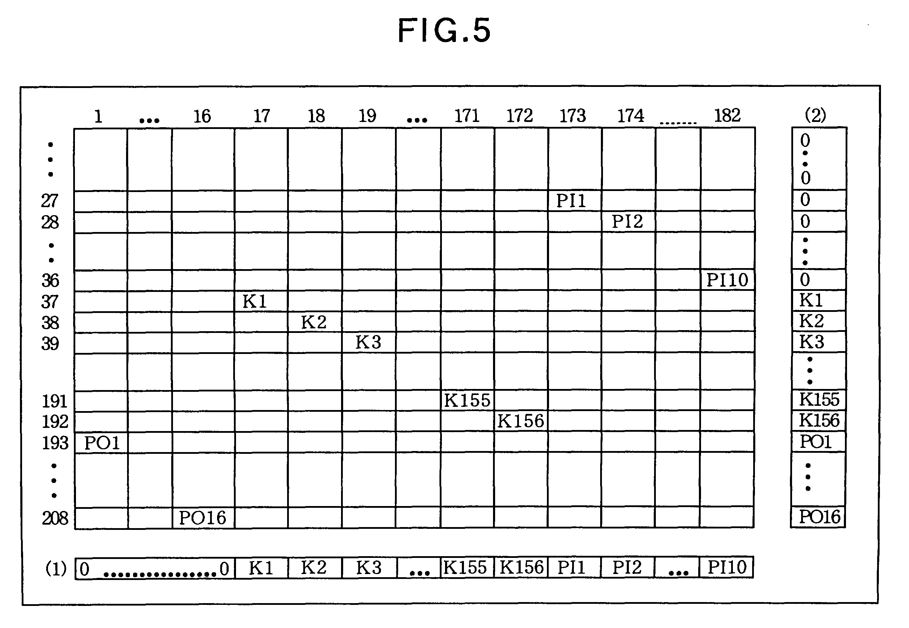

FIG. 5 is a diagram illustrating the above-mentioned ECC block with key information added thereto. As shown in this example, the key information is constituted by key data of 156 bytes K1 through K156 for example, 10-byte key parities PI1 through PI10 for error-correcting the key data in row direction, and 16-byte key parities PO1 through PO16 for error-correcting the key data in column direction. These key data and key parities are inserted a maximum of one byte in each of row and column directions, thereby preventing the error correction process by the ECC from degradation. Preferably, these key data and key parities are arranged to avoid mixing with the start ID, IED, and CPR_MAI and the end EDC data in the data frame of DVD (in FIG. 5, K156 is incidentally recorded at the position of EDC data, which is preferably avoided).

Parity data PI1 through PI10 and PO1 through PO16 are added as the remainder of the generator polynomial for parity generation. Error correction is performed in a manner in which a part (1) of FIG. 5 is copied from the positions from which the key data and key parities are vertically embedded, the copy is error-corrected by the same PI decoding method as DVD, and the error-corrected data is copied to a part (2) of FIG. 5. At this time, among the 182 symbols, any symbol data having no key data and key parity is replaced by a fixed default value (for example, '0'). Key parities PO are added to the resultant data column, on which error correction is performed in the same manner as the DVD PO decoder. At this time, among the 208 symbols, any symbol data having no key data and key parity is replaced by a fixed default value (for example, '0'). This method allows the use of the same decoder as that of DVD to error-correct the key data mixed in the DVD data as noise data.

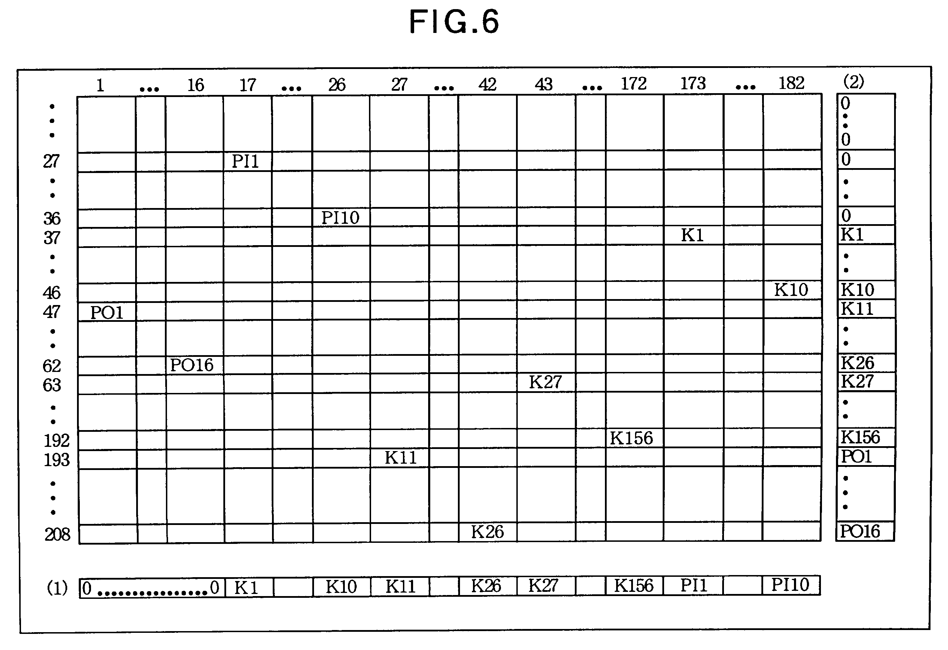

The above-mentioned method is one of available methods, and may allow a player machine to read out key data as noise data when the data block is treated without DVD decoder correction. Hence, more preferably, 26 recording positions of the key data are replaced by the recording positions of key parity data, which is shown in FIG. 6. In this method, the key data and the key parities are replaced by each other before error correction. If the data at 172 x 192 areas are read out without correction and if the correction key parities (PI1 through PI10, PO1 through PO16) cannot be read, loss of 26 symbols has taken place for both PI correction and PO correction, thereby making it difficult to decrypt the key data by error correction. Consequently, the key data cannot be retrieved.

If as many as 156 pieces of key data are not necessary for one ECC block, key data K1 through K156 may not be mixed in particular ECC blocks. In this case, at the time of error correction, the data block is filled with a fixed value (for example, '0') as with the positions having no key data so as to perform ECC decoding (addition of PI and PO) and encoding (error correction).

If the occurrence of a burst error is expected in an actual application, it is preferable that mixing of key data in adjacent rows be avoided as long as possible. For example, in the case of DVD, a parity PO of one row is attached to a data frame of 12 rows, so that one row of key data or key parity is mixed in every 13 rows. Namely, the PO parity portion is always mixed with one piece of key data or key parity and one row is inserted into 12 rows according to the DVD rule.

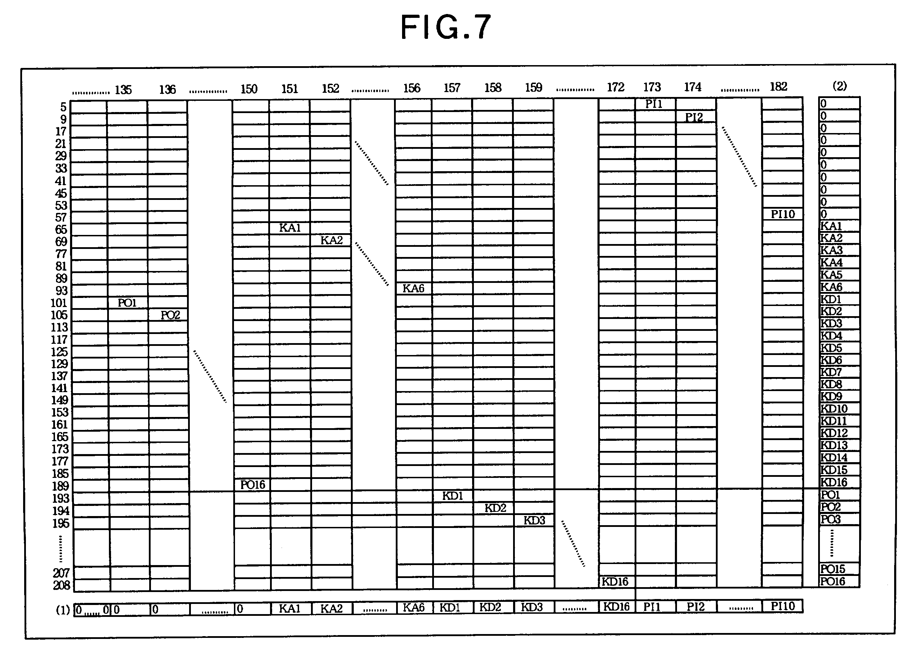

FIG. 7 is a diagram illustrating the mixing of key data or key parities, two pieces of key data or key parities in 12 rows and one piece of key data or key parity in 4 rows. The number of key data or key parities to be mixed amounts to a total of 48. The portions having no key data or key parity are filled by a fixed value (for example, '0') in order to perform parity generation and error correction. In this example, the key data are divided into KA1 through KA6 and KD1 through KD16, KA1 through K6 providing control data (such as address) and KD1 through KD16 providing the key data.

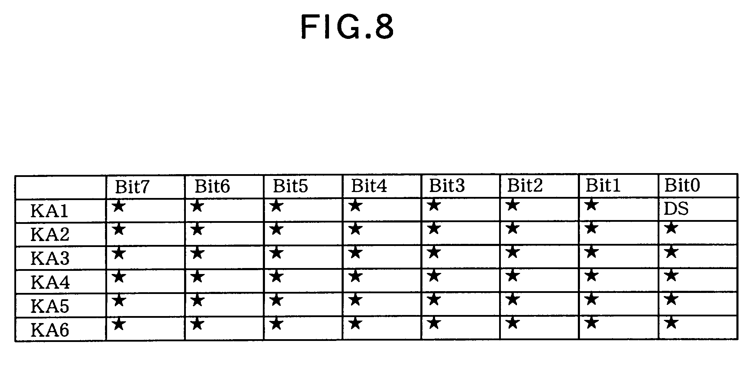

FIG. 8 is a diagram illustrating an example of the control data. DS is set to bit 0 of KA1. When DS = '0', KD1 through KD16 are assigned to encrypted session key data. When DS = '1', KD1 through KD16 are allotted to encrypted machine ID and disk ID.

In the example of FIG. 7, the same error correction method as FIG. 6 is used. Namely, the data is copied from the position from which the key data and key parities PI0 through PI10 are vertically mixed into a part (1), error correction is performed on the copy by the same PI decoding method as DVD (at this time, PO1 through PO16 are '0's), and the corrected data is copied to another part (2). At this time, KD1 through KD16 are replaced by PO1 through PO16. Key parities PO are added to these data rows and error correction is performed thereon by the same method as the PO decoding of DVD. The corrected KA1 through KA6 and KD1 through KD16 are used as the key data.

The method of parity generation for Reed-Solomon code is the same as that of DVD. Namely, if the key data (filled with '0' in blank bytes) and the data on the PO parity domain are denoted by A0 through A207 from top, then a remainder R(X) is obtained from the following mathematical expression 1:

RS(208, 192, 17)

$$R(X)= \sum_{i=192}^{207} Ai*X^{207-i}$$

$$=\{I(X)*X^{16}\}mod\{Gpo(X)\}$$

where

$$I(X)= \sum_{i=0}^{191} Ai*X^{191-i}$$

$$Gpo(X)=\prod_{k=0}^{15}(X+\alpha^{k})$$

Likewise, if the key data (filled with '0' in blank bytes) and the data on the IP parity domain are B0 through B181 from top, then a remainder R(X) is obtained from the following mathematical expression 2:

$$RS(182, 172, 11)$$

$$R(X)= \sum_{i=172}^{181} Bi*X^{181-1}$$

$$=\{I(X)*X^{10}\}mod\{Gpo(X)\}$$

where,

$$I(X)= \sum_{i=0}^{171} Bi*X^{171-1}$$

$$Gpo(X)=\prod_{k=0}^{9}(X+\alpha^{k})$$

It should be noted that, in the mathematical expressions 1 and 2, the primitive polynomial for generating $\alpha$ is as follows:

$$P(x) = x^{8} + x^{4} + x^{3} + x^{2} + 1$$

The following describes machine and disc authentication. In the above-mentioned embodiment,

- this case is no one-to-one machine authentication;
- mutual data communication means through a network is not available; and
- there is only one-way information transmission means through media.

Under such a circumstance, the machine ID authentication is not provided in the strict sense, but only the level of group ID authentication may be realized. This level is just equivalent to the ID number input of commercially available CD-ROMs. Therefore, even if the verification function is kept secret, it may be crypto-analized such that the encryption is not so high in strength against cracking. The following information must be issued for authentication from the license issuing organization:

- machine ID; and
- verification function

For the machine ID, a 16-digit number is used and about 1,000,000,000 types are assumed. For the verification function, a message digest function of MHD or SHA-1 is applied to provide one that is obtained by performing bit manipulation on a computation result (128 bits for MHD and 160 bits for SHA-1). Let own machine ID be Ma and a machine ID detected from a given medium be Mb, then the following is used for a decision condition:

$$F (Ma, Mb) = C (Constant)$$

However, function G such as G(Ma) = G(Mb) = C exists for the substantial form. If the machine ID cannot be included in the authentication to be transmitted, this function F is alternatively used for key encryption and decryption.

The following describes the encryption method of key. In case that a method based on widely used discrete logarithmic computation is used for example, the following is given as common information provided by the license issuing organization:

- great prime number n (for example, decimal 300 digits and about 1024 bits); and

- generation source g (g ^ (n - 1) = 1 ).

For the principle equation, the following is used:

$$y = g \char94 x \ (modulo\ n)$$

The value y can be easily obtained from x but not vice versa as n increases. This property is used for encryption. Generation source g permits unidirectional transposition of all positive integers up to 1 ... (n - 1). Random number r is generated for use as a session key (g and r are positive integers less than n). To generate an execution key on the basis of r, the following equation is used:

$$y0 = g \char94 r$$

From the above-mentioned relation, the execution key consisting of 1024 bits is obtained. This key may be used as it is. If data which is an integral multiple of 1024 bits (= 128 bytes) is necessary, the required data may be generated from the following relations:

$$y1 = g \wedge y0$$

$$y2 = g \wedge y1$$

For a method of generating a bit stream (S) on the basis of r, the following method may be used. To be specific, $y0 = g \wedge r$ is calculated. If y0 is greater than $n*1/2$, then $S(0) = 1$; otherwise, $S(0) = 0$. Likewise, $y1 = g \wedge y0$ is calculated. If y1 is greater than $n*1/2$, then $S(1) = 1$; otherwise $S(1) = 0$. Thus, the bit stream can be generated.

Use of the first 56 bits of the bit stream thus generated may permit to multiply every 64 bits of data by DES (or triple DES by use of the first 112 bits). Essentially, the value r should be passed to the other party with n and g as common information. It can be understood that the initial random number r does not cause any problem if n is large enough even in the case of 128 bits. In addition to the above-mentioned discrete logarithmic computation, encryption methods based on elliptic curves are also adaptable.

The data contained in ECC2 may be one of the following three cases:

(1) encrypted session key, machine ID, and disc ID;
(2) encrypted session key and machine ID; and
(3) encrypted session key.

Each case results in different embedded key length and authentication method and accuracy.

It is assumed in every case that the session key be encrypted and decrypted by use of machine ID and disc ID in some form. In the cases of (2) and (3) above, if the session key is decrypted by mistake, the data itself is decrypted incoherently. If this happens, however, an EDC error occurs during decryption, so that there is little possibility of erroneous abnormal reproduction of the data. If the length of the key to be embedded is 32 bytes for example, then the following bit lengths can be allocated:

- encrypted session key, 128 bits;
- encrypted machine ID, 64 bits (numeral of 16 digits); and
- encrypted disc ID, 64 bits (numeral of 16 digits).

It is desirable for the encrypted execution key to be changed a predetermined time interval to make cracking difficult.

If it is practicable to perform encryption and decryption by use of two or more ECC blocks, the first block may include the encrypted session key of 128 bits, and the second block may include the encrypted machine ID of 64 bits and the encrypted disc ID of 64 bits. If encryption and decryption must be completed within a single ECC block for some reason, the session key (128 bits) encrypted by the machine ID and the disc ID is used, and decryption is performed by use of presumably correct data, namely own machine ID and own disc ID. The data itself is decrypted by use of the session key and the decrypted data is checked for EDC error.

Data encryption is performed by scrambling the data on an ECC block basis for example. To be specific, the data is encrypted by performing scramble processing by use of a new scramble preset value obtained by executing an EXOR operation between a scramble preset value in the compliant scramble processing as DVD and the execution key. Data decryption is performed by descrambling the data on an ECC block basis. For the decryption, the same processing as the scramble processing used in encryption is used. Then the data has been thus descrambled, it returns to the form before it was encrypted. Whether the data decryption by this scramble processing has been performed correctly or not can be determined by checking the sector error detection code (EDC).

The following describes specific encryption processing and decryption processing based on the above-mentioned system. In the following processing, encryption and decryption within a single ECC block is adopted for example. Assume that the following types of information are provided by the license issuing organization:

(1) Common information

n = great prime number, 1024 bits.
g = generation source, a positive integer less than n.

H: dedicated hash function for session key encryption and decryption;
input parameter = machine ID and disc ID, and output value = 128 bits.
R: random number generation function for session key generation;
input parameter = system time (Tm) and disc ID, and output value = 128 bits.

(2) Information issued for individual machine

M = machine ID, decimal 16 digits (in the following example, the write side ID is denoted by Ma and the read side ID is denoted by Mb).

(3) Information embedded for individual medium

D =     disc ID, decimal 16 digits (in the following example, the write side ID is denoted by Da and the read side ID is denoted by Db). If both are correct, Da = Db .

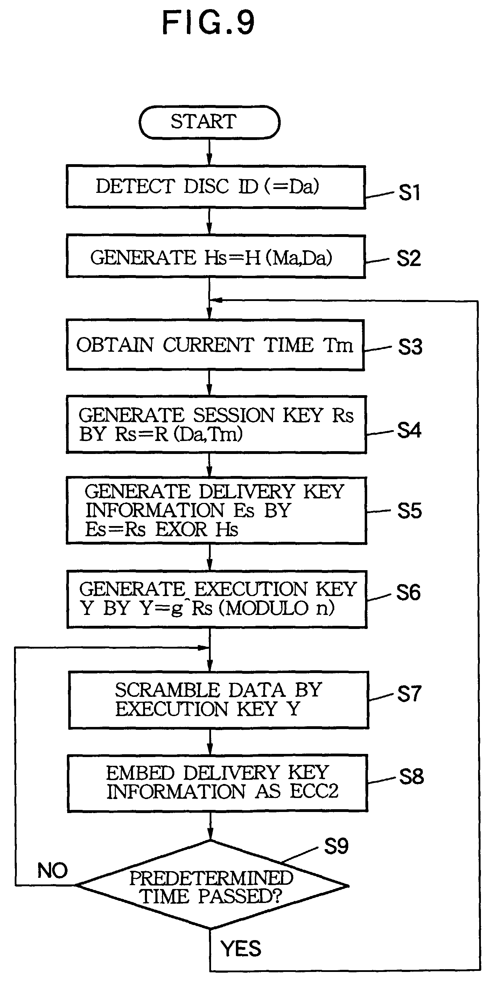

FIG. 9 is a flowchart indicative of the procedure of the write processing by the recorder described with reference to FIG. 1. First, the disc ID is detected (S1). Next, by use of the dedicated hash function H, a hash value Hs (128 bits) is generated on the basis of Hs = H (Ma, Da) (S2). Current system time (= Tm) is obtained (S3). Session key Rs (128 bits) is obtained from a random number generation function R (Da, Tm) on the basis of Rs = R (Da, Tm) (S4). An EXOR operation is executed between Rs and Hs to generate delivery key information Es (= Rs XOR Hs: 128 bits) (S5). In addition, on the basis of $Y = g \wedge Rs$ (modulo n), the execution key Y (1024 bits) is generated (S6). By use of the execution key Y, the data is scrambled (S7). The delivery key information Es (128 bits) is embedded in the obtained ECC block (S8). Until a predetermined time has passed, steps S7 and S8 are repeated for each sector. When the predetermined time has passed, another current system time (= Tm) is obtained again to update the session key Rs (S9). A machine-readable medium M may be used in the recording machine of FIG. 1 having a processor or CUP for encrypting data using a key and issuing a compliant mark to authenticate the data. The medium M is loaded into a media drive, and contains program instructions executable by the processor to cause the recording machine to perform the encryption process as illustrated by FIG. 9.

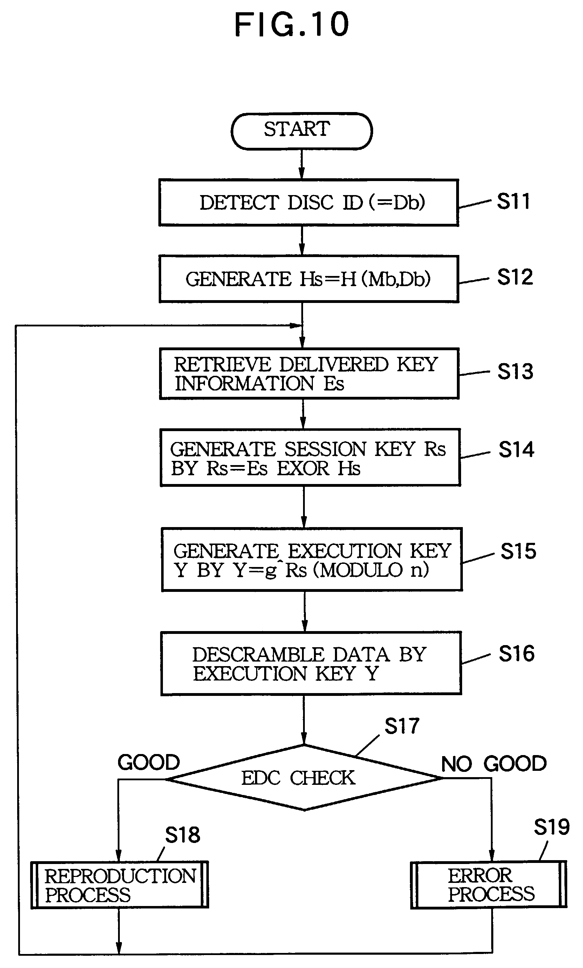

FIG. 10 is a flowchart indicative of the procedure of the read operation by the player machine described with reference to FIG. 2. First, disc ID (= Db) is obtained (S11). Next, hash value Hs (128 bits) is generated from dedicated hash function H on the basis of Hs = H (Mb, Db) (S12). Delivered key information Es (128 bits) is retrieved (S13). An EXOR operation is performed between Es and Hs to generate a session key Rs (128 bits) on the basis of Rs = Es  EXOR Hs (514). On the basis of $Y = g \wedge Rs$ (modulo n), execution key Y (1024 bits) is generated (S15). By use of Y, the data is descrambled (S16). Finally, the EDC (sector error detection code) is checked (S17). If the EDC is found normal, the data is reproduced (S18). If an error is found, an error processing routine is activated (S19). Subsequently, the processing operations of S13 and further on are repeated. A machine-readable medium in the form of disc 21 may be used in the reproducing machine of FIG. 2 having the CPU 32 for decrypting data using a key and recognizing a compliant mark embedded in the data to authenticate the data. The medium may contain program instructions executable by the to cause the reproducing machine to perform the decrypting process illustrated in FIG. 10.

In the above-mentioned embodiments, the scramble initial preset value is EXORed with the encrypted execution key of 15 bits. But, this may be insufficient as a key length. In the current encryption technologies, the key lengths less than 40 bits are coming to be regarded as not effective. Namely, unless a scramble method can be guaranteed against cracking, a known encryption principle is applied to read data with ease by a method in which round-robin trials are made to check for EDC errors and, if no EDC error is encountered, cracking is regarded as successful. Consequently, in order to enhance the degree of security, the following methods may be employed.

(1) Because 1024 bits (= 128 bytes) are obtained from the delivered and decrypted session key of 128 bits by a single power operation, performing 16 power residue operations on 2048 bytes of the data area can execute EXOR operations on these bytes on a bit by bit basis.
(2) A value obtained by a single power residue operation is EXORed on a bit by bit basis by repeating the power residue operation for every 128 bytes of the data area.

These methods require some change of conventional hardware configurations, but can significantly make the most of the session key of 128 bits delivered at much expense in time and effort.

As mentioned above and according to the invention, data is encrypted and key information for decrypting the encrypted data is additionally written as a compliant mark over a data block, to which error correction is performed. Consequently, this compliant mark does not appear in the data obtained by reproduction. Since the data copied in a non-compliant manner includes no compliant mark, such data cannot be reproduced by a compliant reproducing machine, and the encrypted data cannot be reproduced by a non-compliant machine. In addition, according to the invention, the key information for decryption is additionally written over the data, thereby facilitating key delivery.

**Claims**

1.  An encryption method of data using a key and being performed in a compliant recording machine issuing a compliant mark for authenticating the data, the encryption method comprising the steps of:

    encrypting the data before recording thereof with the key such that the key is required to decrypt the data when the recorded data is to be reproduced by a player machine;
    adding an error correction code to the encrypted data to form a data block such that the data can be made free of a noise by an error correction process of the data block using the error correction code when the data is to be reproduced by the player machine; and

writing secret information containing the key and the compliant mark over the data block in the form of a noise such that the secret information containing the key and the compliant mark can be separated from the data by the error correction process performed by the player machine, thereby allowing the player machine to use the key to decrypt the data only if the player can detect the compliant mark from the separated secret information.

2. The encryption method as claimed in claim 1, further comprising the steps of providing information being necessary for encrypting the data and containing an identification code of the compliant recording machine and a function group dedicated for generating the compliant mark, and generating the compliant mark from the key based on the provided information while the key is used to execute encryption of the data.

3. The encryption method as claim in claim 1, further comprising the steps of providing information containing an identification code identifying a medium used for recording the data, another identification code identifying the compliant recording machine and a function group dedicated for generating the compliant mark, and generating the compliant mark from the key based on the provided information while the key is used to execute encryption of the data.

4. An encryption method of data using a key and being performed in a compliant recording machine capable of attaching a compliant mark for authenticating the data, the encryption method comprising the steps of:

initially generating a session key in a random manner;
subsequently generating an execution key from the session key;
encrypting the data before recording thereof with the execution key such that the execution key is required to decrypt the data when the recorded data is to be reproduced by a player machine;
adding an error correction code to the encrypted data to form a data block such that the data can be made free of a noise by an error correction process of the data block using the error correction code when the data is to be reproduced by the player machine;

further generating the compliant mark from the session key such that the compliant mark contains information of the session key; and

writing the compliant mark over the data block in the form of a noise such that the compliant mark can be separated from the data by the error correction process performed by the player machine, thereby allowing the player machine to restore the execution key from the separated compliant mark so as to decrypt the data only if the player machine can recognize the separated compliant mark.

5. The encryption method as claimed in claim 4, wherein the step of further generating comprises generating the compliant mark by encrypting the session key.

6. The encryption method as claimed in claim 5, wherein the step of further generating comprises generating the compliant mark by encrypting the session key according to specific information including dedicated functions, thereby allowing the player machine to decrypt the session key to restore the execution key only if the player machine can handle the specific information.

7. The encryption method as claimed in claim 5, wherein the step of adding comprises adding an error correction code to the encrypted data to form the data block and recording the formed data block in a medium allotted an identification code, and wherein the step of further generating comprises generating the compliant mark by encrypting the session key based on the identification code allotted to the medium so that the identification code is incorporated into the compliant mark.

8. The encryption method as claimed in claims 4 wherein the step of initially generating comprises generating the session key in a random manner such as to change the session key at a predetermined time interval.

9. The encryption method as claimed in claim 4, wherein the step of adding comprises adding an error correction code to the encrypted data to form the data block such that the data block contains the data composed of a plurality of bytes arranged in a matrix of rows and columns, and the error correction code composed of first parity information used for performing the error correction process on the rows of the data and second parity information used for performing the error correction process on the columns of the data, and wherein the step of writing comprises writing the compliant mark over the data block in the form of a noise such that each row of the data contains at most one byte of the compliant mark and each column of the data contains at most one byte of the compliant mark.

10. The encryption method as claimed in claim 9, wherein the step of initially generating comprises generating the session key composed of key data and a key parity used for an error correct process of the key data, and

wherein the step of writing comprises writing the compliant mark containing the key data and the key parity of the session key over the data block such that a part of the key data is written over the error correction code and a part of the key parity is written over the matrix of the data.

11. A decryption method of data using a key and performed in a compliant reproducing machine capable of recognizing a compliant mark embedded in the data for authenticating the data, the decryption method comprising the steps of:

inputting a data block composed of encrypted data and an error correction code into the compliant reproducing machine together with secret information embedded in the dada block in the form of a separable noise, the secret information containing a key and a compliant mark;

performing an error correction process of the inputted data block with the error correction code to separate the noise from the encrypted data;

detecting the compliant mark from the separated noise according to information prestored in the compliant reproducing machine including an identification code thereof; and

restoring the key from the separated noise using the detected compliant mark, thereby allowing the compliant reproducing machine to decrypt the encrypted data by the restored key.

12. The decryption method as claimed in claim 11, wherein the step of detecting comprises detecting the compliant mark according to an identification code of the compliant reproducing machine and another identification code of a medium which is used to record the data block and is loaded into the compliant reproducing machine.

13. A decryption method of data performed in a reproducing machine using a session key generated in a random manner, the decryption method comprising the steps of:

inputting a data block composed of encrypted data and an error correction code into the reproducing machine together with information of the session key embedded in the dada block in the form of a separable noise;

performing an error correction process of the inputted data block with the error correction code to separate the noise from the encrypted data; and

restoring the session key from the separated noise, thereby allowing the reproducing machine to decrypt the encrypted data by the restored session key,

wherein the step of inputting comprises inputting the data block that contains the encrypted data composed of a plurality of bytes arranged in a matrix of rows and columns, the error correction code composed of first parity information used for performing the error correction process on the rows of the data and second parity information used for performing the error correction process on the columns of the data, and the information of the session key composed of a plurality of bytes distributed over the data block such that each row of the encrypted data contains at most one byte of the session key and each column of the encrypted data contains at most one byte of the session key, and

wherein the step of performing includes rearranging the information of the session key contained in the separated noise into either of one row or one column of the bytes, and applying an error correction process to the rearranged information of the session key.

14. The decryption method as claimed in claim 13, wherein the step of rearranging comprises rearranging the information of the session key into one row or one column of the bytes having the same dimension as one row or one column of the encrypted data, and the step of applying comprises applying the same error correction process to the rearranged information of the session as that applied to the encrypted data.

15. The decryption method as claimed in claim 13, wherein the step of rearranging comprises rearranging the information of the session key scattered over the data block into one row or one column of the bytes such that one row or one column may contain blank bytes, and interpolating the blank bytes by filling thereto a default value.

16. The decryption method as claimed in claim 13, wherein the step of inputting comprises inputting a group of data blocks together with the session key embedded commonly to each of the dada blocks of the same group, and the step of restoring comprises restoring the session key which is valid only for decryption of the data blocks belonging to the same group.

17. A recording apparatus for encrypting data using a key and issuing a compliant mark for authenticating the data, the recording apparatus comprising:

an encrypting section that encrypts the data with the key before recording of the data such that the key is required to decrypt the encrypted data when the recorded data is to be reproduced by a player machine;

an encoding section that adds an error correction code to the encrypted data to form a data block such that the encrypted data can be made free of a noise by an error correction process of the data block using the error correction code when the encrypted data is to be reproduced by the player machine; and

a writing section that writes secret information containing the key and the compliant mark over the data block in the form of a noise such that the secret information containing the key and the compliant mark can be separated from the encrypted data by the error correction process performed by the player machine, thereby allowing the player machine to use the key to decrypt the encrypted data only if the player machine can detect the compliant mark from the separated secret information.

18. A recording apparatus with encrypting of data using a key and being capable of attaching a compliant mark for authenticating the data, the recording apparatus comprising:

a first generating section that initially generates a session key in a random manner;

a second generating section that subsequently generates an execution key from the session key;

an encrypting section that encrypts the data with the execution key before recording of the data such that the execution key is required to decrypt the encrypted data when the recorded data is to be reproduced by a player machine;

an encoding section that adds an error correction code to the encrypted data to form a data block such that the encrypted data can be made free of a noise by an error correction process of the data block using the error correction code when the recorded data is to be reproduced by the player machine;

a third generating section that further generates the compliant mark from the session key such that the compliant mark contains information of the session key; and

a writing section that writes the compliant mark over the data block in the form of a noise such that the compliant mark can be separated from the data by the error correction process performed by the player machine, thereby allowing the player machine to restore the execution key from the separated compliant mark so as to decrypt the data only if the player machine can recognize the separated compliant mark.

19. A reproducing apparatus with decrypting of data using a key and being capable of recognizing a compliant mark embedded in the data for authenticating the data, the reproducing apparatus comprising:

an input section that receives a data block composed of encrypted data and an error correction code together with secret information embedded in the dada block as a separable noise, the secret information containing a key and a compliant mark;

a decoding section that performs an error correction process of the received data block with the error correction code to separate the noise from the encrypted data;

a detecting section that detects the compliant mark from the separated noise according to prestored information including a machine identification code;

a restoring section that restores the key from the separated noise using the detected compliant mark; and

a decrypting section that decrypts the encrypted data by the restored key so as to reproduce the data.

20. A reproducing apparatus with decrypting of encrypted data using a session key generated in a random manner, the reproducing apparatus comprising:

an input section that receives a data block composed of encrypted data and an error correction code together with information of the session key embedded in the dada block as a separable noise;

a decoding section that performs an error correction process of the received data block with the error correction code to separate the noise from the encrypted data;

a restoring section that restores the session key from the separated noise; and

a decrypting section that decrypts the encrypted data based on the restored session key,

wherein the input section receives the data block containing the encrypted data composed of a plurality of bytes arranged in a matrix of rows and columns, the error correction code composed of first parity information used for performing the error correction process on the rows of the encrypted data and second parity information used for performing the error correction process on the columns of the encrypted data, and the information of the session key composed of a plurality of bytes distributed over the data block such that each row of the encrypted data contains at most one byte of the session key and each column of the encrypted data contains at most one byte of the session key, and

wherein the decoding section rearranges the information of the session key contained in the separated noise into either of one row or one column of the bytes, and applies an error correction process to the rearranged information of the session key.

21. A machine-readable medium for use in a recording machine having a processor for encrypting data using a key and issuing a compliant mark to authenticate the data, the medium containing program instructions executable by the processor to cause the recording machine to perform a process comprising the steps of:

encrypting the data with the key before recording of the data such that the key is required to decrypt the data when the recorded data is to be reproduced by a player machine;

adding an error correction code to the encrypted data to form a data block such that the encrypted data can be made free of a noise by an error correction process of the data block using the error correction code when the encrypted data is to be reproduced by the player machine; and

writing secret information containing the key and the compliant mark over the data block in the form of a noise such that the secret information containing the key and the compliant mark can be separated from the encrypted data by the error correction process performed by the player machine, thereby allowing the player machine to use the key to decrypt the encrypted data only if the player machine can detect the compliant mark from the separated noise.

22. A machine-readable medium for use in a recording machine having a processor for encrypting data using a key and attaching a compliant mark to authenticate the data, the medium containing program instructions executable by the processor to cause the recording machine to perform a process comprising the steps of:

initially generating a session key in a random manner;

subsequently generating an execution key from the session key;

encrypting the data with the execution key before recording of the data such that the execution key is required to decrypt the encrypted data when the recorded data is to be reproduced by a player machine;

adding an error correction code to the encrypted data to form a data block such that the encrypted data can be made free of a noise by an error correction process of the data block using the error correction code when the recorded data is to be reproduced by the player machine;

further generating the compliant mark from the session key such that the compliant mark contains information of the session key; and

writing the compliant mark over the data block in the form of a noise such that the compliant mark can be separated from the data by the error correction process performed by the player machine, thereby allowing the player machine to restore the execution key from the separated compliant mark so as to decrypt the data only if the player machine can recognize the separated compliant mark.

23. A machine-readable medium for use in a reproducing machine for decrypting data using a key and recognizing a compliant mark embedded in the data to authenticate the data, the medium containing program instructions executable by the processor to cause the reproducing machine to perform a process comprising the steps of:

receiving a data block composed of encrypted data and an error correction code together with secret information embedded in the dada block as a separable noise, the secret information containing a key and a compliant mark;

performing an error correction process of the received data block with the error correction code to separate the noise from the encrypted data;

detecting the compliant mark from the separated noise according to prestored information including an identification code of the reproducing machine;

restoring the key from the separated noise using the detected compliant mark; and

decrypting encrypted data by the restored key so as to reproduce the data.

24. A machine-readable medium for use in a reproducing machine having a processor for decrypting encrypted data using a session key generated in a random manner, the medium containing program instructions executable by the processor to cause the reproducing machine to perform a process comprising the steps of:

receiving a data block composed of encrypted data and an error correction code together with information of the session key embedded in the dada block as a separable noise;

performing an error correction process of the received data block with the error correction code to separate the noise from the encrypted data;

restoring the session key from the separated noise; and

decrypting the encrypted data based on the restored session key,

wherein the step of receiving receives the data block containing the encrypted data composed of a plurality of bytes arranged in a matrix of rows and columns, the error correction code composed of first parity information used for performing the error correction process on the rows of the encrypted data and second parity information used for performing the error correction process on the columns of the encrypted data, and the information of the session key composed of a plurality of bytes distributed over the data block such that each row of the encrypted data contains at most one byte of the session key and each column of the encrypted data contains at most one byte of the session key, and

wherein the step of performing the error correction process rearranges the information of the session key contained in the separated noise into either of one row or one column of the bytes, and applies an error correction process to the rearranged information of the session key.

25. An encryption method of data using a key and being performed in a compliant recording machine issuing a compliant mark for authenticating the data, the encryption method comprising the steps of:

encrypting the data before recording thereof;
adding an error correction code to the encrypted data; and
writing secret information containing the key and the compliant mark over the data block in the form of a noise.

# FIG.1

EP 1 020 856 A2

# FIG.2

EP 1 020 856 A2

# FIG.3

# FIG.4

# FIG.5

| | 1 ... 16 | 17 | 18 | 19 ... | 171 | 172 | 173 | 174 ....... | 182 | (2) |
|---|---|---|---|---|---|---|---|---|---|---|
| • • • | | | | | | | | | | 0 • • 0 |
| 27 | | | | | | | PI1 | | | 0 |
| 28 | | | | | | | | PI2 | | 0 |
| • • • | | | | | | | | | | • • • |
| 36 | | | | | | | | | PI10 | 0 |
| 37 | | K1 | | | | | | | | K1 |
| 38 | | | K2 | | | | | | | K2 |
| 39 | | | | K3 | | | | | | K3 |
| | | | | | | | | | | • • • |
| 191 | | | | | K155 | | | | | K155 |
| 192 | | | | | | K156 | | | | K156 |
| 193 | PO1 | | | | | | | | | PO1 |
| • • • | | | | | | | | | | • • • |
| 208 | | PO16 | | | | | | | | PO16 |

(1) | 0 .................0 | K1 | K2 | K3 | ... | K155 | K156 | PI1 | PI2 | ... | PI10 |

EP 1 020 856 A2

# FIG.6

| | 1 | ... | 16 | 17 | ... | 26 | 27 | ... | 42 | 43 | ... | 172 | 173 | ... | 182 | (2) |
|---|---|---|---|---|---|---|---|---|---|---|---|---|---|---|---|---|
| ⋮ | | | | | | | | | | | | | | | | 0<br>⋮<br>0 |
| 27 | | | | PI1 | | | | | | | | | | | | 0 |
| ⋮ | | | | | | | | | | | | | | | | ⋮ |
| 36 | | | | | | PI10 | | | | | | | | | | 0 |
| 37 | | | | | | | | | | | | | K1 | | | K1 |
| ⋮ | | | | | | | | | | | | | | | | ⋮ |
| 46 | | | | | | | | | | | | | | | K10 | K10 |
| 47 | PO1 | | | | | | | | | | | | | | | K11 |
| ⋮ | | | | | | | | | | | | | | | | ⋮ |
| 62 | | | PO16 | | | | | | | | | | | | | K26 |
| 63 | | | | | | | | | | K27 | | | | | | K27 |
| ⋮ | | | | | | | | | | | | | | | | ⋮ |
| 192 | | | | | | | | | | | | | K156 | | | K156 |
| 193 | | | | | | K11 | | | | | | | | | | PO1 |
| ⋮ | | | | | | | | | | | | | | | | ⋮ |
| 208 | | | | | | | | | K26 | | | | | | | PO16 |

(1) | 0 ...............0 | K1 | | K10 | K11 | | K26 | K27 | | K156 | PI1 | | PI10 |

EP 1 020 856 A2

# FIG.7

# FIG.8

| | Bit7 | Bit6 | Bit5 | Bit4 | Bit3 | Bit2 | Bit1 | Bit0 |
|---|---|---|---|---|---|---|---|---|
| KA1 | ★ | ★ | ★ | ★ | ★ | ★ | ★ | DS |
| KA2 | ★ | ★ | ★ | ★ | ★ | ★ | ★ | ★ |
| KA3 | ★ | ★ | ★ | ★ | ★ | ★ | ★ | ★ |
| KA4 | ★ | ★ | ★ | ★ | ★ | ★ | ★ | ★ |
| KA5 | ★ | ★ | ★ | ★ | ★ | ★ | ★ | ★ |
| KA6 | ★ | ★ | ★ | ★ | ★ | ★ | ★ | ★ |

# FIG.9

```
        ┌─────────────┐
        │    START    │
        └─────────────┘
               │
               ▼
┌──────────────────────────────┐
│   DETECT DISC ID (=Da)        │──── S1
└──────────────────────────────┘
               │
               ▼
┌──────────────────────────────┐
│   GENERATE Hs=H (Ma,Da)       │──── S2
└──────────────────────────────┘
               │
               ▼
┌──────────────────────────────┐
│   OBTAIN CURRENT TIME Tm      │──── S3
└──────────────────────────────┘
               │
               ▼
┌──────────────────────────────┐
│   GENERATE SESSION KEY Rs     │──── S4
│   BY Rs=R (Da,Tm)             │
└──────────────────────────────┘
               │
               ▼
┌──────────────────────────────┐
│   GENERATE DELIVERY KEY       │──── S5
│   INFORMATION Es BY           │
│   Es=Rs EXOR Hs               │
└──────────────────────────────┘
               │
               ▼
┌──────────────────────────────┐
│   GENERATE EXECUTION KEY      │──── S6
│   Y BY Y=g^Rs (MODULO n)      │
└──────────────────────────────┘
               │
               ▼
┌──────────────────────────────┐
│   SCRAMBLE DATA BY            │──── S7
│   EXECUTION KEY Y             │
└──────────────────────────────┘
               │
               ▼
┌──────────────────────────────┐
│   EMBED DELIVERY KEY          │──── S8
│   INFORMATION AS ECC2         │
└──────────────────────────────┘
               │
               ▼
         ◇─────────────◇        S9
  NO    ╱  PREDETERMINED ╲
 ───────  TIME PASSED?
         ╲               ╱
          ◇─────────────◇
               │
              YES
```

Flowchart steps:
- START
- S1: DETECT DISC ID (=Da)
- S2: GENERATE $Hs = H(Ma, Da)$
- S3: OBTAIN CURRENT TIME Tm
- S4: GENERATE SESSION KEY Rs BY $Rs = R(Da, Tm)$
- S5: GENERATE DELIVERY KEY INFORMATION Es BY $Es = Rs$ EXOR $Hs$
- S6: GENERATE EXECUTION KEY Y BY $Y = g^{Rs} (MODULO\ n)$
- S7: SCRAMBLE DATA BY EXECUTION KEY Y
- S8: EMBED DELIVERY KEY INFORMATION AS ECC2
- S9: PREDETERMINED TIME PASSED? — NO / YES

# FIG.10

```
          ┌─────────────┐
          │    START    │
          └─────────────┘
                 │
                 ▼
     ┌──────────────────────────┐
     │  DETECT DISC ID (=Db)    │──── S11
     └──────────────────────────┘
                 │
                 ▼
     ┌──────────────────────────┐
     │  GENERATE Hs=H (Mb,Db)   │──── S12
     └──────────────────────────┘
                 │
                 ▼
     ┌──────────────────────────┐
     │  RETRIEVE DELIVERED KEY  │──── S13
     │  INFORMATION Es          │
     └──────────────────────────┘
                 │
                 ▼
     ┌──────────────────────────┐
     │  GENERATE SESSION KEY Rs │──── S14
     │  BY Rs=Es EXOR Hs        │
     └──────────────────────────┘
                 │
                 ▼
     ┌──────────────────────────┐
     │  GENERATE EXECUTION KEY  │──── S15
     │  Y BY Y=g^Rs (MODULO n)  │
     └──────────────────────────┘
                 │
                 ▼
     ┌──────────────────────────┐
     │  DESCRAMBLE DATA BY      │──── S16
     │  EXECUTION KEY Y         │
     └──────────────────────────┘
                 │
                 ▼      S17
  GOOD  ◇──────────────────◇  NO GOOD
        ◇    EDC CHECK      ◇
        ◇──────────────────◇
    │                          │
   S18                        S19
    ▼                          ▼
┌──────────────┐        ┌──────────────┐
│ REPRODUCTION │        │ ERROR        │
│ PROCESS      │        │ PROCESS      │
└──────────────┘        └──────────────┘
```

Session key generated by $Rs = Es\ \mathrm{EXOR}\ Hs$

Execution key generated by $Y = g^{Rs}\ (\mathrm{MODULO}\ n)$